# EUROPÄISCHE PATENTSCHRIFT

(11) **EP 1 767 705 B1**
(45) Veröffentlichungstag und Bekanntmachung des Hinweises auf die Patenterteilung: **24.12.2008**
(21) Anmeldenummer: 06018293.8
(22) Anmeldetag: 01.09.2006
(51) Int. Cl.: E02D 27/42

(54) **Verfahren zur Gründung eines Fundamentkörpers für eine Windenergieanlage**
Method of settling a foundation for a windmill
Méthode d'ancrage d'une fondation pour une éolienne

(30) Priorität: 21.09.2005 DE 102005044989
(43) Veröffentlichungstag der Anmeldung: 28.03.2007
(73) Patentinhaber: NORDEX Energy GmbH, 22848 Norderstedt (DE)
(72) Erfinder: Jakubowski, Alexander, Dr.-Ing., 46236 Bottrop (DE); Nitzpon, Joachim, 20255 Hamburg (DE); Wederhake, Ralf, 22761 Hamburg (DE); Marburger, Markus, 22846 Norderstedt (DE)
(74) Vertreter: Hauck Patent- und Rechtsanwälte

(56) Entgegenhaltungen:
- JP-A- 11 303 097
- JP-A- 2005 163 299
- JP-A- 2005 220 712
- US-A- 5 533 835
- US-A- 5 826 387
- US-A1- 2004 098 935
- US-A1- 2004 131 428

## Beschreibung

Die vorliegende Erfindung betrifft ein Verfahren zur Gründung eines Fundamentkörpers für eine Windenergieanlage.

Zur Verankerung des Rohrturms einer Windenergieanlage sind grundsätzlich zwei Varianten möglich. Bei der ersten Variante wird ein Rohrstück mit einem umlaufenden Flansch in ein Fundament einbetoniert. Der Turmfuß der Windenergieanlage wird nachfolgend mit dem Rohrstück verschraubt. Bei der zweiten Variante wird nicht ein Rohrstück sondern ein aus mehreren Ankerbolzen bestehender Ankerkorb in dem Fundamentkörper einbetoniert. Der Turmfuß wird dann mit den Ankerbolzen verschraubt.

Bei der letztgenannten Variante sind die Ankerbolzen zu einem Ankerkorb zusammengefaßt. Der Ankerkorb weist an seinem Grund eine Ankerplatte oder einen Ankerring auf, der mit den Ankerbolzen verschraubt ist. Das freie Ende der Ankerbolzen steht aus dem Fundamentkörper vor, um mit dem Turmfußflansch verschraubt zu werden.

Die Herstellung des Fundamentkörpers erfolgt bauseits, indem die freien Enden der Ankerbolzen mit einer wieder verwendbaren Ankerbolzenschablone gesichert werden. Die Ankerbolzenschablone besteht regelmäßig aus zwei Halbkreisen, die über Laschen am Umfang miteinander verbunden sind. Die Halbkreise besitzen in vordefinierten Positionen Bohrungen zur Aufnahme der Ankerbolzen. Zur Befestigung der Ankerbolzenschablone wird diese auf jedem Ankerbolzen durch ein Mutterpaar gesichert. Nachfolgend wird die Fundamentbewehrung durch den Ankerkorb verlegt, wobei der Fundamentkörper und seine Bewehrung deutlich größer als der Ankerkorb sind. Beispielsweise kann der Fundamentkörper Abmessungen von ungefähr 15x 15 m besitzen, während der Ankerkorb je nach Größe des Rohrturms beispielsweise einen Durchmesser von 3 bis 5 m besitzt. Nach Einbringen der Bewehrung und einer entsprechenden Verschalung des Fundamentkörpers, wird dieser mit Beton vergossen. Nach dem Vergießen werden die Mutternpaare von den Ankerbolzen gelöst und die Ankerbolzenschablone entfernt. Nachfolgend wird ein ein- oder mehrstückiges Lastverteilblech auf die Ankerbolzen gesetzt und über Futterbleche und Stellschrauben auf den Ankerbolzen horizontal ausgerichtet. Das ausgerichtete Lastverteilblech wird dann nachfolgend mit einem hochfesten Quellmörtel untergossen. Das untergossene Lastverteilblech bildet die Auflagefläche für einen Turmfußflansch. Die Ankerbolzen werden bei der Befestigung des Turmfußflansches durch den Fundamentkörper hindurch gespannt.

Das Dokument US-A-5 826 387 offenbart ein solches Verfahren.

Als nachteilig an der vorstehenden Vorgehensweise zur Gründung hat sich herausgestellt, dass die Montage und Demontage der Ankerbolzenschablone ein aufwendiger Arbeitsschritt ist. Hinzu kommt, dass durch die Wiederverwendung einer Ankerbolzenschablone Ungenauigkeiten in deren Bohrungen entstehen, die beim Einbringen der Bewehrung und dem anschließenden Betonieren erhalten bleiben und so zu Ungenauigkeiten des Ankerbolzenkreises führen.

Der Erfindung liegt die Aufgabe zugrunde, ein Verfahren zur Gründung eines Fundamentkörpers und zur Vorbereitung des Turmanschlusses bereitzustellen, das bauseits mit einfachen Mitteln ausgeführt werden kann.

Erfindungsgemäß wird die Aufgabe durch ein Verfahren mit den Merkmalen aus Anspruch 1 gelöst. Vorteilhafte Ausgestaltung bilden die Gegenstände der Unteransprüche.

Das erfindungsgemäße Verfahren zur Gründung eines Fundamentkörpers für eine Windenergieanlage geht von einem Ankerkorb aus, der aus einer Ankerplatte und mehreren mit der Ankerplatte verbundenen Ankerbolzen besteht. Die Ankerplatte kann hierbei aus einer durchgehenden Platte oder aus einem Ring bestehen. Die freien Enden der Ankerbolzen werden durch ein einteiliges oder mehrteiliges Lastverteilblech geführt. Das Lastverteilblech liegt auf mindestens drei auf die Ankerbolzen geschraubten Muttern auf. Die Ankerbolzen sind durch das Aufliegen des Lastverteilblechs bereits hinreichend für die nachfolgenden Arbeitsschritte gesichert.

In einem nachfolgenden Schritt wird eine Bewehrung für den Fundamentkörper eingebracht und der Ankerkorb mit Bewehrung wird mit Beton vergossen. Nachfolgend werden die Ankerbolzen gespannt, bei einem Befestigen des Turmfußflansches. Ein besonderer Vorteil des erfindungsgemäßen Verfahrens besteht darin, dass auf eine gesonderte Ankerbolzenschablone verzichtet wird. Hierdurch werden die durch die Verwendung der Ankerbolzenschablone entstehenden Ungenauigkeiten bei der Ausrichtung der Bolzen vermieden. Ferner entfällt der Arbeitsschritt, die gesonderte Ankerbolzenschablone auf die Ankerbolzen zu montieren und nachfolgend wieder zu entfernen. Die Erfindung beruht auf der Erkenntnis, dass das einmal auf die Ankerbolzen gesetzte Lastverteilblech dort verbleiben kann, wenn es über Bolzenmuttern unterhalb des Lastverteilblechs abgestützt ist. Bei einer vorbestimmten Kraft versagen die Bolzenmuttern, indem das Gewinde der Mutter an dem Gewinde des Ankerbolzens abgestreift wird. Die so abstreifbaren Bolzenmuttern behindern bei der Befestigung des Turmfußes nicht das Spannen des Ankerbolzens, so dass sie ihre ursprüngliche Funktion verloren haben.

In einer bevorzugten Ausgestaltung wird das Lastverteilblech auf den Ankerbolzen nach Eingießen des Ankerkorbs ausgerichtet. Hierbei wird das Lastverteilblech in eine horizontale Position als Auflage für einen Turmfuß gebracht. Das ausgerichtete Lastverteilblech wird nachfolgend, vorzugsweise mit einem hoch-festen Quellmörtel vergossen, wodurch das Lastverteilblech unterfüttert wird. Die Ausrichtung des Lastverteilblechs erfolgt über die Bolzenmutter, auf der das Lastverteilblech aufliegt. Zweckmäßigerweise kann die Ausrichtung des Lastverteilbelchs gegenüber dem zuerst gegossenen Fundamentkörper auch über Stellschrauben und/oder Futterbleche erfolgen.

Um einerseits eine ausreichende Abstützung des Lastverteilblechs sicherzustellen, beispielsweise während die Bewehrung angebracht wird, ist es erforderlich, dass die Bolzenmutter ausreichend fest sitzt. Andererseits ist es erforderlich, dass bei einer geringen Vorspannkraft der Ankerbolzen, das Gewinde der Bolzenmutter sich am Gewinde des Ankerbolzens abstreifen läßt. Hier hat es sich als besonders vorteilhaft herausgestellt, die Bolzenmuttern mit einem Kunststoffgewinde zu versehen, vorzugsweise können auch vollständig aus Kunststoff hergestellte Bolzenmuttern verwendet werden.

Das erfindungsgemäße Verfahren wird nachfolgend näher beschrieben:
- Figur 1: einen montierten Ankerkorb bestehend aus zwei Teilen in einer perspektivischen Ansicht,
- Figur 2: die Verbindung eines Ankerbolzens mit der Ankerplatte,
- Figur 3: die Verbindung des Lastverteilblechs mit den Ankerbolzen und
- Figur 4: eine Vierloch-Schablone zur Ausrichtung der Ankerkorbteile.

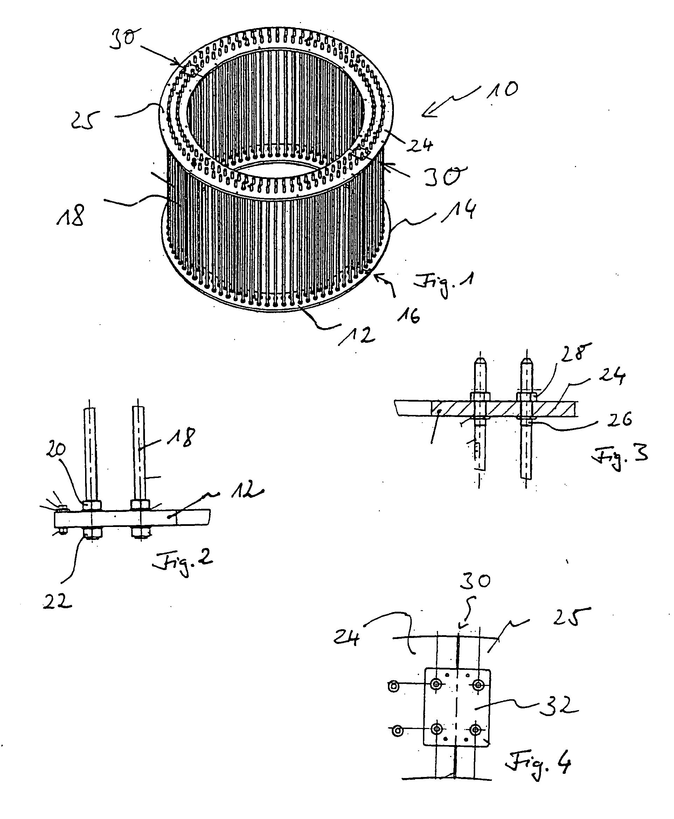

Figur 1 zeigt einen fertig montierten Ankerkorb 10 mit einer zweiteiligen Ankerplatte 12 und 14. Jede der Ankerplatten 12 und 14 bildet einen Halbkreis, die im montierten Zustand an einer Kante 16 aneinander stoßen. (Die hintere Kante 16 ist in Figur 1 verdeckt.) In den Ankerplatten 12 und 14 sind Ankerbolzen 18 verschraubt. Die Ankerbolzen sind jeweils über ein Mutternpaar 20 an der Ankerplatte fixiert.

Auf die freien Enden der Ankerbolzen wird ein Lastverteilblech 24 aufgesetzt. Wie in Figur 3 zu erkennen, sind unterhalb des Lastverteilblechs Kunststoff-Schraubenmuttern 26 vorgesehen, die das Lastverteilblech 24 abstützen. Die Kunststoff-Schraubenmuttern 26 dienen zur temporären Lagerung des Lastverteilblechs während der Montage. Auch erlauben sie eine endgültige horizontale Ausnivellierung des Lastverteilblechs. Die Kunststoff-Schraubenmuttern 26 sind derart ausgebildet, dass sie bereits bei vergleichsweise niedriger Vorspannung durch ein Abstreifen des Gewindes versagen, aber das Gewicht des Lastverteilblechs und zusätzliche Beanspruchung beispielsweise infolge von Transport und/oder Montage sicher abstützen kann. Wie in Figur 3 dargestellt, kann das Lastverteilblech durch Gegenmuttern 28 auf dem Ankerbolzen fixiert werden.

Die Ankerplatten 12 und 14 mit den jeweils fixierten Ankerbolzen 18 sind vormontiert. Das Lastverteilblech ist ebenso wie die Ankerplatte zweiteilig ausgebildet und entspricht in seiner Geometrie im wesentlichen der Ankerplatte. Die Teile des Lastverteilblechs stoßen an den Kanten 30 aneinander.

In Figur 4 ist dargestellt, dass die Teile des Lastverteilblechs über eine Schablone 32 miteinander ausgerichtet werden. Die Vierloch-Schablone 32 besitzt eine geringe Toleranz, so dass die Teile sich präzise an einander ausrichten lassen.

Das Verfahren zur Herstellung eines Fundamentkörpers läuft folgendermaßen ab. Zunächst wird der Ankerkorb mit den Ankerbolzen und der Ankerplatte in Position gebracht. Der Ankerkorb besitzt ungefähr 80 Ankerpaare, die doppelreihig angeordnet sind. Die Ankerbolzen sind mit Kunststoffhüllrohren umgeben, um eine Vorspannung ohne Verbund in dem Fundamentkörper herzustellen. Die Kunststoffhüllrohre um die Bolzen sind mit einem Schrumpfschlauch als Abschluß versehen, um den Eintritt von Vergußmasse in das Rohrinnere zu verhindern.

Auf den in Position gebrachten Ankerkorb, der in seiner Position horizontal ausgerichtet ist, wird ein zweiteiliges Lastverteilblech aufgesetzt. Das Lastverteilblech nimmt die Last von dem Turm auf und leitet diese in den Fundamentkörper ein. Um das Lastverteilblech 24, 25 leichter auf die Ankerbolzen setzen zu können, verjüngen diese sich kegelförmig 34 an ihrem Ende. Ungefähr 24 Ankerbolzen sind mit Kunststoffmuttern 26 versehen. Die Kunststoffmuttern 26 bestehen vollständig aus Kunststoff und besitzen eine Höhe von ungefähr 20 mm. Auf die Kunststoffmuttern 26 werden die Lastverteilbleche 24 und 25 aufgelegt. Um ein Abspringen eines Lastverteilblechs beispielsweise beim Einführen der Bewehrung zu verhindern, wird das Lastverteilblech zusätzlich über einige Muttern 28 von oben an den Ankerbolzen gesichert. Die Muttern 28 dürfen hierbei nur mit einem geringen Moment angezogen werden, um ein vorzeitiges Abstreifen der Kunststoffmuttern 26 zu verhindern. Über die Lastverteilbleche 24 und 25 sind die Ankerbolzen in ihrer Position fixiert und können bei dem nachfolgenden Einbringen der Bewehrung und dem Gießen des Fundamentkörpers ihre Position nicht verändern. Nach dem Vergießen und Aushärten des Betons für den Fundamentkörper, wird das Lastverteilblech horizontal ausgerichtet. Hierbei wird üblicherweise ein Abstand von ungefähr 5 cm zur Oberkante des Fundamentkörpers eingehalten. Das Ausrichten des Lastverteilblechs erfolgt über die Kunststoffschrauben 26 sowie ggf. Stellschrauben und Futterbleche. Der so gebildete Hohlraum zwischen Lastverteilblech und Obergrenze des Fundamentkörpers wird nachfolgend mit einem hochfesten Quellmörtel vergossen. Hierbei verbleiben die Kunststoffmuttern 26 auf den Ankerbolzen.

Der aufgesetzte Turmfuß besitzt einen Flansch, mit Bohrungen, die den Positionen der Ankerbolzen entsprechen. Der aufgesetzte Turmfuß wird mit dem Ankerkorb über Muttern befestigt. Hierbei wird eine definierte Vorspannung in die Ankerbolzen eingebracht. Durch die über das Lastverteilblech auf die Muttern übertragene Vorspannkraft werden diese über das Gewinde an dem Ankerbolzen geschoben und verlieren so ihre Tragfähigkeit.

## Patentansprüche

1. Verfahren zur Gründung eines Fundamentkörpers für eine Windenergieanlage, das die folgenden Schritte aufweist:
- ein Ankerkorb (10) bestehend aus einer Ankerplatte (12, 14) und mehreren mit der Ankerplatte verbundenen Ankerbolzen (18) wird bereitgestellt,
- die freien Enden der Ankerbolzen werden durch Bohrungen in mindestens einem Lastverteilblech (24, 25) geführt,
- das Lastverteilblech (24, 25) liegt auf mindestens drei Bolzenmuttern (26), die auf die Ankerbolzen (18) geschraubt sind,
- eine Bewehrung für den Fundamentkörper wird angebracht und der Ankerkorb (10) mit der Bewehrung eingegossen, wobei die Ankerbolzen (18) mit den Bolzenmuttern (26) vorstehen,
- bei einem nachfolgenden Spannen der Ankerbolzen (18) zwischen Ankerplatte (12, 14) und Lastverteilblech (24, 25) werden die Bolzenmuttern (26) unterhalb des Lastverteilblechs (24, 25) über das Gewinde des Ankerbolzens (18) gestreift und verlieren ihre Tragfähigkeit.

2. Verfahren nach Anspruch 1, **dadurch gekennzeichnet, dass** nach dem Eingießen des Ankerkorbs (10) das Lastverteilblech (24, 25) auf den Ankerbolzen (18) über die Bolzenmuttern (26) ausgerichtet und vergossen wird.

3. Verfahren nach Anspruch 2, **dadurch gekennzeichnet, dass** das Lastverteilblech (24, 25) zusätzlich über Stellschrauben und/oder Futterbleche auf dem Ankerbolzen (18) ausgerichtet wird.

4. Verfahren nach Anspruch 2 oder 3, **dadurch gekennzeichnet, dass** der Fundamentkörper aus Beton gegossen wird.

5. Verfahren nach Anspruch 3, **dadurch gekennzeichnet, dass** das ausgerichtete Lastverteilblech (24, 25) in einem hochfesten Mörtel eingegossen ist.

6. Verfahren nach einem der Ansprüche 1 bis 5, **dadurch gekennzeichnet, dass** die Bolzenmuttern (26) zur Abstützung des Lastverteilblechs (24, 25) ein Kunststoffgewinde aufweist.

7. Verfahren nach einem der Ansprüche 1 bis 6, **dadurch gekennzeichnet, dass** das Lastverteilblech (24, 25) aus zwei halbkreisförmigen Elementen besteht, die an ihrer Stoßstelle (30) über eine Schablone (32) aneinander ausgerichtet und miteinander verbunden werden.

## Claims

1. Method of settling a foundation for a windmill, which has the following steps:
- an anchor basket (10) consisting of an anchor plate (12, 14) and several anchor bolts (18) connected with the anchor plate is provided,
- the free ends of the anchor bolts are guided through bore holes in at least one load distribution plate (24, 25),
- the load distribution plate (24, 25) lies on at least three bolt nuts (26), which are screwed onto the anchor bolts (18),
- a reinforcement for the foundation is attached and the anchor basket (10) is integrally cast with the reinforcement, wherein the anchor bolts (18) protrude with the bolt nuts (26),
- in the case of a subsequent tensioning of the anchor bolts (18) between the anchor plate (12, 14) and the load distribution plate (24, 25), the bolt nuts (26) are stripped below the load distribution plate (24, 25) by the thread of the anchor bolt and lose their load-bearing capacity.

2. Method according to claim 1, **characterized in that** after the sealing of the anchor basket (10) the load distribution plate (24, 25) is aligned on the anchor bolts (18) via the bolt nuts (26) and is cast.

3. Method according to claim 2, **characterized in that** the load distribution plate (24, 25) is also aligned via adjusting screws and/or lining plates on the anchor bolt (18).

4. Method according to claim 2 or 3, **characterized in that** the foundation is cast from concrete.

5. Method according to claim 3, **characterized in that** the aligned load distribution plate (24, 25) is integrally cast in a high-strength mortar.

6. Method according to one of claims 1 through 5, **characterized in that** the bolt nuts (26) has a plastic thread in order to support the load distribution plate (24, 25).

7. Method according to one of claims 1 through 6, **characterized in that** the load distribution plate (24, 25) consists of two semi-circular elements, which are aligned with each other at their joint (30) via a template (32) and are connected with each other.

## Revendications

1. Méthode d'ancrage d'une fondation pour une éolienne, présentant les étapes suivantes :
- un panier d'ancrage (10) comprenant une plaque d'ancrage (12, 14) et plusieurs boulons d'ancrage (18) reliés à la plaque d'ancrage est fourni,
- les extrémités libres des boulons d'ancrages sont guidées par des trous dans au moins une tôle de répartition de charge (24, 25),
- la tôle de répartition de charge (24, 25) repose sur au moins trois écrous (26) qui sont vissés sur les boulons d'ancrage (18),
- une armature pour l'ancrage est mise en place et le panier d'ancrage (10) est coulé avec l'armature, les boulons d'ancrage (18) dépassant avec les écrous (26),
- lors d'un serrage subséquent des boulons d'ancrage (18) entre la plaque d'ancrage (12, 14) et la tôle de répartition de charge (24, 25), les écrous (26) sont rayés en-dessous de la tôle de répartition de charge (24, 25) par le filet du boulon d'ancrage (18) et perdent leur pouvoir porteur.

2. Méthode selon la revendication 1, **caractérisée en ce qu'**après le coulage du panier d'ancrage (10), la tôle de répartition de charge (24, 25) est alignée sur les boulons d'ancrage (18) par l'intermédiaire des écrous (26) et scellée.

3. Méthode selon la revendication 2, **caractérisée en ce que** la tôle de répartition de charge (24, 25) est alignée sur le boulon d'ancrage (18) en outre par l'intermédiaire de vis de réglage et/ou de tôles de fourrure.

4. Méthode selon la revendication 2 ou 3, **caractérisée en ce que** la fondation est coulée à partir de béton.

5. Méthode selon la revendication 3, **caractérisée en ce que** la tôle de répartition de charge (24, 25) alignée est coulée dans un mortier à résistance élevée.

6. Méthode selon l'une des revendications 1 à 5, **caractérisée en ce que** les écrous (26) présente un filet en matière plastique pour supporter la tôle de répartition de charge (24, 25).

7. Méthode selon l'une des revendications 1 à 6, **caractérisée en ce que** la tôle de répartition de charge (24, 25) est constituée de deux éléments semi-circulaires qui sont alignés l'un par rapport à l'autre et reliés l'un à l'autre au niveau de leur joint (30) par un gabarit (32).
